# EUROPÄISCHE PATENTSCHRIFT

(11) **EP 3 580 492 B1**
(45) Veröffentlichungstag und Bekanntmachung des Hinweises auf die Patenterteilung: **01.11.2023**
(21) Anmeldenummer: 18701716.5
(22) Anmeldetag: 22.01.2018
(51) Int. Cl.: F21V 8/00

(54) **LEUCHTE MIT LICHTLEITPLATTE**
LAMP HAVING LIGHT GUIDE PLATE
LUMINAIRE ÉQUIPÉ DE PLAQUE DE GUIDAGE DE LUMIÈRE

(30) Priorität: 10.02.2017 DE 102017202123
(43) Veröffentlichungstag der Anmeldung: 18.12.2019
(73) Patentinhaber: Zumtobel Lighting GmbH, 6850 Dornbirn (AT)
(72) Erfinder: KELLER, Katharina, 88161 Lindau (DE)
(74) Vertreter: Kiwit, Benedikt
(86) Internationale Anmeldenummer: PCT/EP2018/051464
(87) Internationale Veröffentlichungsnummer: WO 2018/145887

(56) Entgegenhaltungen:
- US-A1- 2005 013 127
- US-A1- 2013 343 086
- US-A1- 2015 160 395
- US-A1- 2016 327 724

## Beschreibung

Die vorliegende Erfindung betrifft eine Leuchte mit einer flächigen Lichtleitplatte mit Einkoppelstrukturen zum Einkoppeln von Licht in die Lichtleitplatte sowie Auskoppelstrukturen zum Auskoppeln des eingekoppelten Lichts aus der Lichtleitplatte.

Aus dem Stand der Technik sind entsprechende Leuchten mit Lichtleitplatten bekannt, bei denen das Licht, das beispielsweise von LEDs ausgesandt wird, seitlich in die Lichtleitplatte eingekoppelt wird. Das Licht breitet sich dann in der Lichtleitplatte mittels Totalreflexion aus und wird beispielsweise mittels an einer flächigen Seite der Lichtleitplatte vorgesehenen Auskoppelstrukturen derart umgelenkt, um in der Regel über die gegenüberliegende flächige Seite aus der Lichtleitplatte möglichst homogen ausgekoppelt zu werden. Die Druckschriften US 2013/343086 A1 und US 2015/160395 A1 zeigen derartige Lichtleitplatten.

Die hierbei verwendeten Auskoppelstrukturen werden oft als aufgedruckte Punkt- oder Flächenmuster, als Laser-geschnittene Rillen oder andere definierte Strukturen beispielsweise in speziellen Fertigungsverfahren, wie beispielsweise dem Laser Schneiden oder Screen Printing, hergestellt.

Die nach derzeitigem Stand der Technik verwendeten Einkoppelstrukturen verwenden überwiegend ein gerades, durchgängiges Profil - also die gerade Stirnseite der Lichtleitplatte - , um Licht von außerhalb der Lichtleitplatte in die Lichtleitplatte einzukoppeln. Dadurch wird das Licht breitgefächert und nicht gerichtet in die Lichtleitplatte eingekoppelt, so dass die Auskoppelstrukturen von Licht aus unterschiedlichsten Richtungen getroffen werden, ehe das Licht wieder aus der Lichtleitplatte ausgekoppelt wird. Das austretende Licht weist dabei eine große Bandbreite an unterschiedlichen Austrittsrichtungen aus der Lichtleitplatte auf und kann damit zu ungünstigen Lichtverteilungen führen. Abhängig von den Auskoppelstrukturen weisen bekannte Lichtleitplatten dabei meist eine cosinus-artige Lichtverteilung auf, andere zeigen einen Peak senkrecht zu der Lichtleitplatte. Insbesondere ist es somit möglich, dass aufgrund der gegebenen Lichtverteilung Licht ungünstigstenfalls konzentriert in einer bestimmten Richtung ausgekoppelt wird, so dass der Benutzer von dem austretenden Licht geblendet wird.

Mit den aus dem Stand der Technik bekannten Lösungen ist jedoch keine sichere definierte Lichtumlenkung und beispielsweise auch keine wirksame Entblendung des Lichts zu erreichen, da die Auskoppelstrukturen nicht an die sich in der Lichtleitplatte in unterschiedlichsten Richtungen ausbreitenden Lichtstrahlen angepasst werden kann. Daher verwenden viele der aus dem Stand der Technik bekannten Lösungen zusätzliche optische Komponenten, wie zum Beispiel Blenden, optische Platten bzw. Optiken oder sonstige zusätzliche Entblendungsvorrichtungen.

Unter Entblendung der Lichtleitplatte wird gemäß der Erfindung verstanden, dass vor allem Richtungen in der Lichtverteilung mit abgedeckt werden sollen, die unter Lichtaustrittswinkeln zwischen 65 und 90 Grad auftreten. Gerade dieser Winkelbereich wird bei bisherigen Leuchten weitestgehend nicht abgedeckt, so dass eine Konzentration von Licht im Bereich von 0 bis 65 auftritt, was zu einem Blendeffekt führt.

Es ist somit eine Aufgabe der vorliegenden Erfindung, eine Leuchte mit Lichtleitplatte bereitzustellen, mit welcher bevorzugt ohne zusätzliche Komponenten eine definierte Lichtabgabe ermöglicht wird.

Diese Aufgabe wird durch den Gegenstand des unabhängigen Anspruchs gelöst. Die abhängigen Ansprüche bilden den zentralen Gedanken der vorliegenden Erfindung in besonders vorteilhafter Weise weiter.

Die vorliegende Erfindung betrifft eine Leuchte mit einer flächigen Lichtleitplatte. Die Lichtleitplatte weist zwei flächige Seiten auf, welche durch eine umlaufende Stirnseite miteinander verbunden sind. An der Stirnseite der Lichtleitplatte sind Einkoppelstrukturen vorgesehen, die dazu eingerichtet sind, Licht von Außerhalb in die Lichtleitplatte als gerichtete Strahlbündel einzukoppeln. Ferner weist die Lichtleitplatte Auskoppelstrukturen auf, die an einer der flächigen Seiten vorgesehen sind, um das über die Einkoppelstrukturen eingekoppelte Licht in der Lichtleitplatte derart umzulenken, um es über eine der flächigen Seiten aus der Lichtleitplatte auszukoppeln. Die Auskoppelstrukturen besitzen eine längliche Form, so dass sie sich mit ihrer Längsachse im Wesentlichen in der flächigen Ebene der Lichtleitplatte erstrecken. Die Auskoppelstrukturen sind in ihrer Orientierung derart der Richtung eines der Strahlbündel zugeordnet, dass sie mit ihren Längsachsen im Wesentlichen senkrecht zu der Richtung des zugeordneten Strahlbündels orientiert sind.

Im Rahmen der Erfindung wird dabei unter einer "Struktur" eine makroskopische Struktur in dem Bauteil selbst (hier in der Lichtleitplatte) und an dessen Oberfläche bzw. von dessen Oberfläche in das Bauteilmaterial als konkave Ausnehmung hinein erstreckend verstanden.

Bei den im Rahmen der Erfindung verwendeten "Einkoppelstrukturen" handelt es sich um eine Anzahl von einzelnen Strukturelementen bzw. Strukturbereichen, die dazu vorgesehen sind, Licht in die Lichtleitplatte einzukoppeln und die eine bestimmte Anordnung zueinander besitzen.

Gleichermaßen handelt es sich bei den im Rahmen der Erfindung genannten "Auskoppelstrukturen" um einzelne Strukturelemente bzw. Strukturbereichen, die dazu vorgesehen sind, das eingekoppelte Licht in der Lichtleitplatte umzulenken und somit an aus der Lichtleitplatte wieder auszukoppeln.

Ferner wird gemäß der Erfindung unter einem "Strahlbündel" eine Gesamtheit von Lichtstrahlen verstanden, welche im Wesentlichen gerichtet verlaufen. Diese können über eine gemeinsame Fläche einer einzelnen Einkoppelstruktur in die Lichtleitplatte eingekoppelt werden. Sie besitzen eine im Wesentlichen gleichen Orientierung, das heißt, dass eine geringe Divergenz zwischen den Richtungen der einzelnen Lichtstrahlen in der Lichtleitplatte existiert. Unter "geringer Divergenz" ist beispielsweise eine definierte Auffächerung der Lichtstrahlen des Strahlbündels von kleiner als 90° und vorzugswiese kleiner als 60° verstanden.

Durch die erfindungsgemäße Abstimmung der Ausrichtung der Auskoppelstrukturen auf die Ausgestaltung und die somit herbeigerufene optische Eigenschaft der Einkoppelstrukturen zur definierten Einkopplung von Strahlbündeln in die Lichtleitplatte kann unter anderem erreicht werden, dass das über die Einkoppelstrukturen eingekoppelte Licht an den Auskoppelstrukturen definiert umgelenkt werden kann. Somit kann das Licht durch die Auskoppelstrukturen beispielsweise breiter gefächert aus der Lichtleitplatte abgegeben werden kann, so dass eine wirkungsvolle Entblendung erzielt werden kann. Zwar ist ein mögliches Ziel der vorliegenden Erfindung eine wirkungsvolle Entblendung. Die durch die vorliegende Erfindung bereitgestellte Abstimmung zwischen Einkoppelstrukturen und Auskoppelstrukturen kann jedoch auch ganz allgemein zur definierten Lichtlenkung und Lichtauskopplung eingesetzt werden.

Da die Einkoppelstrukturen und die Auskoppelstrukturen definiert aufeinander abgestimmt sind, kann auf zusätzliche optische Hilfsmittel bspw. zum Entblenden verzichtet werden. Dies erlaubt Einsparungen hinsichtlich Kosten und eröffnet mehr Gestaltungsfreiheit bei Design und Verwendung der Leuchte.

Gemäß einer vorteilhaften Ausgestaltung der Lichtleitplatte kann der Querschnitt der Lichtleitplatte in Draufsicht mehreckig, vorzugsweise rechteckig oder quadratisch oder dreieckig und dergleichen, ausgebildet sein, wobei die Einkoppelstrukturen an wenigstens einer, mehreren oder allen der länglichen Stirnseitenbereiche vorgesehen sind.

Somit wird es ermöglicht, die Einkoppelstrukturen mit den gewünschten Eigenschaften an mehreren gewünschten Seiten vorzusehen und das Licht so möglichst gleichmäßig in die Lichtleitplatte einzukoppeln.

Gemäß einer vorteilhaften Ausgestaltung der Erfindung können die Einkoppelstrukturen an sich bezüglich der flächigen Seiten jeweils gegenüberliegenden Bereichen der Stirnseite vorgesehen sein. Dies bedeutet, dass die Einkoppelstrukturen bevorzugt an bezüglich der flächigen Erstreckung der Lichtleitplatte jeweils gegenüberliegenden Bereichen oder Seiten der Stirnseite vorgesehen sind; sie mithin als an gegenüberliegenden Endbereichen oder Kanten der Lichtleitplatte vorgesehen sind.

Durch diese Ausgestaltung kann eine besonders homogene Lichtverteilung in der Lichtleitpatte erreicht werden und mögliche Störeffekte, wie beispielsweise Musterbildung in der Lichtleitplatte, vermieden werden.

Gemäß der Erfindung erstrecken die Einkoppelstrukturen sich jeweils als konkave Ausnehmung zwischen den flächigen Seiten erstrecken, wobei diese wenigstens über einen Teil und bevorzugt über die gesamte Höhe der Lichtleitplatte ausgebildet sind.

Dadurch wird es möglich, Licht von Außerhalb besonders gleichmäßig in die Lichtleitplatte einzukoppeln und das eintreffende Licht aufzuspalten und als Strahlbündel zu fokussieren.

Gemäß der Erfindung besitzen die Einkoppelstrukturen in Draufsicht auf eine der flächigen Seiten zwei zueinander abgewinkelte Flächen bzw. Flanken zum Einkoppeln jeweils eines Strahlbündels. Die Einkoppelstrukturen weisen hierbei bevorzugt in Draufsicht auf eine der flächigen Seiten eine dreieckige Form auf.

Dadurch ist es möglich, das von Außerhalb der Lichtleitplatte eintreffende Licht in zwei (oder mehr) gleichwertige und gerichtete Strahlbündel aufzuspalten, die im Wesentlichen senkrecht zu den abgewinkelten Flächen der Einkoppelstrukturen orientiert sind. Dies erlaubt es, eine Orientierung der Strahlbündel festzulegen, die für eine vorteilhafte Umlenkung der Strahlbündel durch die Auskoppelstrukturen verwendet werden kann.

Gemäß einer weiteren bevorzugten Ausgestaltung der Erfindung können die zwei zueinander abgewinkelten Flächen einen Winkel im Bereich von 60° bis 120°, bevorzugt von 90°einschließen.

Dadurch ist es möglich, das eingekoppelte Licht in zwei gleichwertige und gerichtete Strahlbündel aufzuspalten, die sich im Wesentlichen senkrecht zu den abgewinkelten Flächen/Flanken der Einkoppelstrukturen orientiert sind und die weiter bevorzugt zudem zueinander in einer im Wesentlichen senkrechten Orientierung stehen. Zudem wird so eine Vereinfachung der Herstellung der Einkoppelstrukturen erreicht.

Gemäß einer vorteilhaften Ausgestaltung der Erfindung können die konkaven Ausnehmungen der Einkoppelstrukturen ausgehend von der Stirnseite eine definierte Tiefe und/oder ein definiertes Verhältnis von Tiefe zu Höhe der Lichtleitplatte bzw. Plattendicke aufweisen.

Dadurch kann sichergestellt werden, dass das Licht wenigstens bis zu einer durch die Profiltiefe beeinflussten Weite in die Lichtleitplatte eindringt. Damit steht ferner ein einfacher Parameter zur Verfügung, die Leuchteigenschaften der Lichtleitplatte vorteilhaft zu beeinflussen. Zudem können Leuchtmittel, LEDs aufweisend, in den konkaven Ausnehmungen platzsparend aufgenommen werden.

Gemäß einer bevorzugten Ausgestaltung der Erfindung können die Auskoppelstrukturen als konkave Ausnehmungen in einer der flächigen Seiten ausgebildet sein.

Durch diese Ausgestaltung wird die Umlenkung des eingekoppelten Lichts auf die den Auskoppelstrukturen gegenüberliegende Seite besonders bevorzugt. Ferner wird die Fertigung der Auskoppelstrukturen erleichtert, so dass Kosten bei der Herstellung eingespart werden können. Zudem wird es möglich, die Lichtleitplatte möglichst kompakt auszuführen und so den Gestaltungsspielraum in Kombination mit Leuchtmitteln und mit anderen Beleuchtungskomponenten zu erhöhen.

Gemäß einer bevorzugten Ausgestaltung der Erfindung können die konkaven Ausnehmungen der Auskoppelstrukturen ausgehend von der sie aufweisenden flächigen Seite eine definierte Tiefe und/oder ein definiertes Verhältnis von Tiefe zu Höhe der Lichtleitplatte bzw. Plattendicke aufweisen.

Dadurch können die Auskoppelstrukturen in gewünschter Weise zur definierten Lichtumlenkung bereitgestellt werden.

Gemäß einer weiteren bevorzugten Ausgestaltung der Erfindung können die konkaven Ausnehmungen der Auskoppelstrukturen in Draufsicht auf die sie aufweisende flächige Seite jeweils bezüglich ihrer Längsachse zu ihren beiden Enden hin spitz zulaufen, vorzugsweise spitz zulaufende Flanken aufweisen.

Durch diese Ausgestaltung ist es möglich, eine große Zahl von Strukturen auf der Oberfläche kompakt anzubringen. Damit kann eine möglichst flächige Auskopplung aus der Lichtleitplatte erreicht werden. Zudem erlaubt die längliche Form der Auskoppelstrukturen eine geeignete Zuordnung zu den Strahlenbündeln. Zugleich wird die zur Umlenkung der Strahlenbündel zur Verfügung stehende Fläche maximiert.

Gemäß einer weiteren bevorzugten Ausgestaltung der Erfindung können die konkaven Ausnehmungen der Auskoppelstrukturen in Richtung ihrer Längsachsen gesehen einen im Wesentlichen U-förmigen oder V-förmigen Querschnitt aufweisen, der zwei aufeinander zu laufende Flanken aufweist.

Dadurch wird es zudem möglich, eine definierte Kante an der Unterseite der Auskoppelstrukturen auszubilden, wodurch die definierte Umlenkung des Strahlenbündels besonders bevorzugt werden kann. Zugleich wird in Kombination mit der vorhergehenden Ausführungsform die zur Umlenkung der Strahlenbündel zur Verfügung stehende Fläche maximiert und derart optimiert, dass die auftreffenden Strahlbündel besonders vorteilhaft zur gegenüberliegenden flächigen Seite umgelenkt werden. Durch die schräge bzw. gebogene Form der Auskoppelstrukturen kann ferner eine definierte Umlenkung des Lichtes zur definierten Auskopplung erzielt werden.

Gemäß der Erfindung besitzt jede der Einkoppelstrukturen in Draufsicht auf eine der flächigen Seiten zwei zueinander abgewinkelte Flächen bzw. Flanken, über die das eingekoppelte Licht als zwei unterschiedlich gerichtete Strahlbündel eingekoppelt wird. Die zwei zueinander abgewinkelten Flächen bzw. Flanken der Einkoppelstrukturen sind in zwei Gruppen aufgeteilt und die Flächen bzw. Flanken einer Gruppe sind alle parallel zueinander ausgerichtet. Die Gesamtheit der Einkoppelstrukturen weist hierbei zwei Gruppen jeweils im Wesentlichen gleich gerichteter Strahlbündel auf. Die Auskoppelstrukturen sind ferner in zwei unterschiedliche Gruppen jeweils im Wesentlichen gleicher Orientierung eingeteilt. Ferner sind die Auskoppelstrukturen jeder der zwei Gruppen je einer der Richtungen der zwei Strahlbündel zugeordnet.

Durch die mehrfache (n>1) Aufspaltung bei gleichzeitiger Fokussierung des Lichts in zwei einzelne Strahlenbündel lassen sich die Auskoppelstrukturen in der Orientierung entlang ihrer Längsachse unterschiedlich ausrichten. Die verschiedenen Gruppierungen führen zu besonders vorteilhaften Effekten bei der Umlenkung der Strahlenbündel an den Auskoppelstrukturen, da einzelne Gruppen gezielt zur Umlenkung bestimmter Strahlenbündel verwendet werden können und dieselben Gruppen andere (Gruppen von) Strahlenbündel im Wesentlichen unbeeinflusst passieren lassen.Somit kann eine definierte Lichtlenkung und Lichtauskopplung erzielt werden.

Die Auskoppelstrukturen derselben Gruppe stehen in ihrer Orientierung im Wesentlichen senkrecht zu der Richtung des jeweils zugeordneten Strahlbündels. Bevorzugt stehen die Auskoppelstrukturen derselben Gruppe in ihrer Orientierung im Wesentlichen parallel zu den jeweils zugeordneten abgewinkelten Flächen bzw. Flanken der Einkoppelstrukturen. Bevorzugt können die Auskoppelstrukturen der einen Gruppe im Wesentlichen senkrecht zu den Auskoppelstrukturen der anderen Gruppe orientiert sein. Dadurch werden zwei gleichwertige Strahlenbündel erzeugt. Das erste Strahlenbündel wird von einer Gruppe der Auskoppelstrukturen mit einer im Wesentlichen gleicher Orientierung im Wesentlichen nicht beeinflusst, während das zweite Strahlenbündel im Wesentlichen senkrecht auf die Auskoppelstrukturen dieser Gruppe trifft und so definiert umgelenkt wird. Dasselbe gilt umgekehrt für die andere Gruppe der Auskoppelstrukturen. Dadurch kann erreicht werden, dass das Licht jeder Gruppe gezielt nur von den zugeordneten Auskoppelstrukturen umgelenkt wird, so dass eine definierte Lichtlenkung bzw. Lichtauskopplung erzielt werden kann.

Gemäß der Erfindung weist die Leuchte die vorbeschriebene Lichtleitplatte sowie Leuchtmittel auf, welche derart angeordnet sind, um Licht über die Einkoppelstrukturen in die Lichtleitplatte einzukoppeln.

Mit einer derart gebildeten Leuchte kann trotz niedriger Bauform die Lichtabgabecharakteristik in einem breiten Maße beliebig aber definiert eingestellt werden. So ist es beispielsweise möglich, eine gute Entblendung auch ohne zusätzliche Entblendungselemente zu erzielen.

Gemäß der Erfindung ist bei der Leuchte vorgesehen, dass jeder Einkoppelstruktur zumindest ein Leuchtmittel zugeordnet ist, wobei das zugeordnete Leuchtmittel in der konkaven Ausnehmung der zugeordneten Einkoppelstruktur angeordnet ist.

Dadurch kann das Licht besonders vorteilhaft in die Lichtleitplatte eingekoppelt werden und es wird eine besonders gleichmäßige und homogene Lichtverteilung in der Lichtleitplatte erzielt. Zudem kann bei Anordnung der Leuchtmittel in der Ausnehmung der Einkoppelstruktur eine kompakte Bauform der Leuchte erzielt werden.

Gemäß der Erfindung ist bei der Leuchte vorgesehen, dass das Leuchtmittel eine LED aufweist, wobei bevorzugt mehrere LEDs auf einer Leiterplatte zusammengefasst sind, welche sich ferner bevorzugt entlang eines die Einkoppelstrukturen aufweisenden Bereichs der Stirnseite erstreckt.

Durch diese Ausgestaltung der Erfindung kann die Leuchte besonders einfach und kompakt gefertigt werden.

Weitere Ausgestaltungsformen und Vorteile der vorliegenden Erfindung werden anhand der folgenden Ausführungsbeispiele im Zusammenhang mit den Figuren der begleitenden Zeichnungen erläutert. Es zeigen:
- Figur 1: eine Draufsicht auf einen Ausschnitt einer Leuchte gemäß einer ersten Ausführungsform der Erfindung,
- Figur 2: eine vergrößerte Darstellung einer einzelnen Einkoppelstruktur aus der Figur 1 in Draufsicht auf die Lichtleitplatte sowie eine exemplarische Strahlenverteilung,
- Figur 3: eine einzelne Auskoppelstruktur aus der Figur 1 in Draufsicht auf die Lichtleitplatte (Figur 3a) sowie eine perspektivische Darstellung der Auskoppelstruktur (Figur 3b),
- Figur 4: eine seitliche Querschnittsansicht eines Ausschnittes der Lichtleitplatte gemäß Figur 1 mit schematischer Darstellung des Ausbreitungsweges eines Lichtstrahles eines der Strahlenbündel, und
- Figur 5: eine schematische Darstellung der Lichtumlenkung eines Lichstrahles eines der Strahlbündel an den Auskoppelstrukturen in Draufsicht, nicht gemäß der beanspruchten Erfindung.

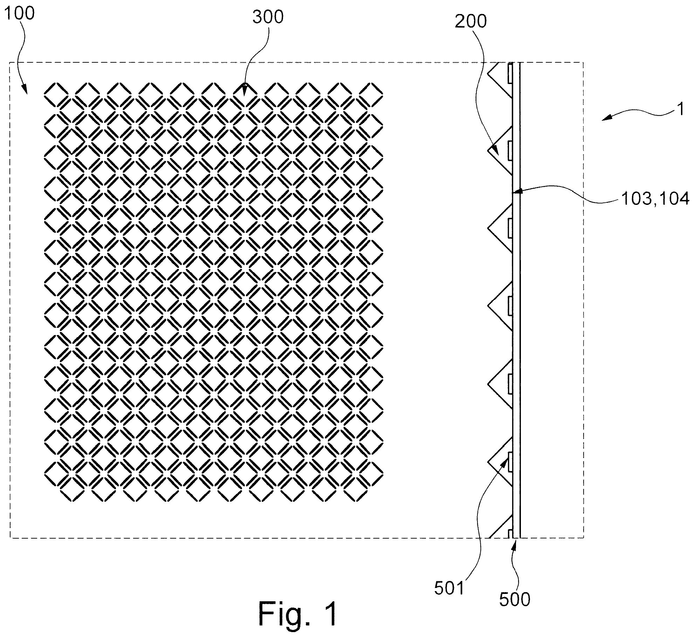

Die Figuren 1 bis 5, und insbesondere Figur 1, zeigen beispielhaft die wesentlichen Elemente einer Lichtleitplatte 100.

Die Lichtleitplatte ist dargestellt mit einer umlaufenden Stirnseite 103, den Einkoppelstrukturen 200, den Auskoppelstrukturen 300 in einer Anordnung gemäß einer ersten Ausführungsform sowie mehrere Leuchtmittel 501 in einer Leuchtmittelhaltevorrichtung 500. Die Kombination aus Lichtleitplatte 100 und Leuchtmittel 501 bildet eine erfindungsgemäße Leuchte 1.

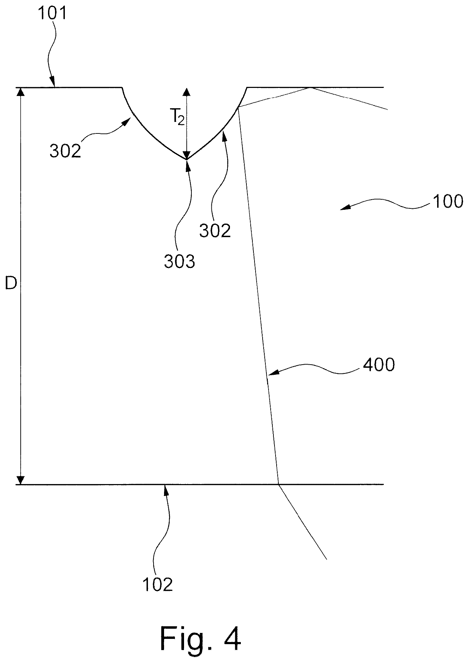

Zur weiteren Beschreibung der Eigenschaften der Lichtleitplatte 100 wird bevorzugt Figur 4 herangezogen, die beispielhaft einen Querschnitt in Längsrichtung der Lichtleitplatte 100 in Draufsicht zeigt. Die Lichtleiplatte 100 weist eine erste flächige Seite 101 sowie eine zweite flächige Seite 102 auf, die beide durch eine außen umlaufende Stirnseite 103 miteinander verbunden sind. Die beiden flächigen Seiten 101, 102 weisen bevorzugt einen definierten Abstand D voneinander auf, der der Dicke der Lichtleitplatte 100 entspricht. Die beiden flächigen Seiten 101, 102 sind vorzugsweise parallel zueinander angeordnet, so dass die Lichtleitplatte eine gleichmäßige Dicke D besitzt, jedoch können die beiden flächigen Seiten alternativ auch einen variierenden Abstand D aufweisen, so dass sich eine variierende Plattenhöhe ergibt. Der Querschnitt der Lichtleitplatte 100 in Draufsicht ist vorzugsweise mehreckig beziehungsweise rechteckig ausgeführt, kann jedoch auch jede andere, beliebige geometrische Form besitzen; beispielsweise quadratisch, dreieckig, rund, oval und dergleichen.

Die Lichtleitplatte 100 kann aus jedem beliebigen Material, welches für Lichtleitplatten geeignet ist, hergestellt sein. Beispielhaft sind hier transparente Kunststoffmaterialien zu nennen.

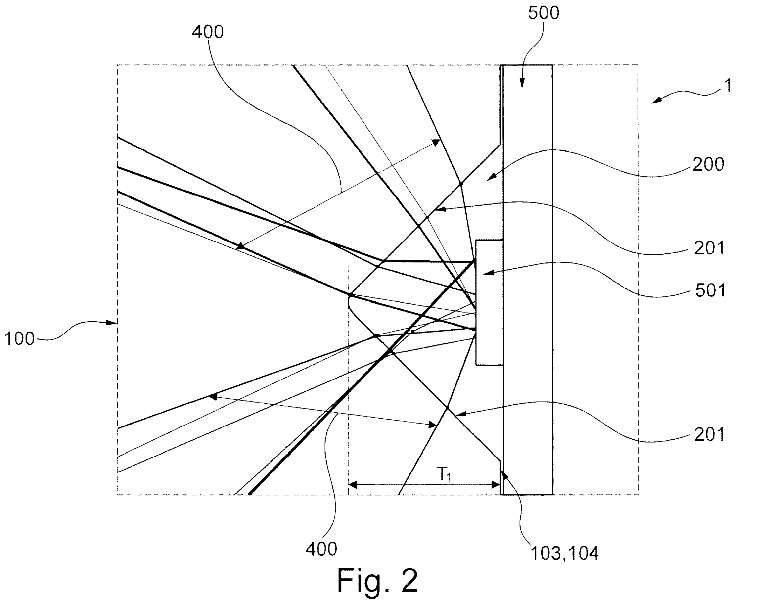

Wie in den Figuren 1 und 2 zu erkennen ist, besteht gemäß einem bevorzugten Ausführungsbeispiel der Erfindung die dem Querschnitt der Lichtleitplatte 100 folgende Stirnseite 103 aus einzelnen länglichen Stirnseitenbereichen 104, die die beiden flächigen Seiten 101,102 umschließen. An bzw. in der Stirnseite 103 und insbesondere wenigstens einem Teil dieser Stirnseitenbereiche 104 sind Einkoppelstrukturen vorgesehen.

Die Einkoppelstrukturen 200 sind gemäß dem Ausschnitt des Ausführungsbeispiels in Figur 1 an der Stirnseite 103 der Lichtleitplatte 100 in einem länglichen Stirnseitenbereich 104 angeordnet, um von dort Licht in die Lichtleitplatte 100 einzukoppeln. Es ist ferner auch denkbar, Einkoppelstrukturen 200 an unterschiedlichen Stirnseitenbereichen 104 entlang der Stirnseite 103 vorzusehen, wobei diese vorzugsweise an sich bezüglich der flächigen Seiten 101, 102, insbesondere bezüglich der flächigen Erstreckung der Lichtleitplatte 100, gegenüberliegenden länglichen Stirnseitenbereichen 104 vorgesehen sind.

Das Ausführungsbeispiel in der Figur 1 zeigt die Einkoppelstrukturen 200 als mehrere, nebeneinander angeordnete, konkave Ausnehmungen. Dabei erstrecken sich die Ausnehmungen von der ersten flächigen Seite 101 zur zweiten flächigen Seite 102 entlang der Stirnseite 103 über die gesamte Höhe bzw. Dicke D der Lichtleitplatte 100. Dabei ist es zudem denkbar, dass sich die konkaven Ausnehmungen auch lediglich über einen Teil der Höhe bzw. Dicke D der Lichtleitplatte 100 bzw. dessen Stirnseite 103 erstrecken. Dabei kann ferner die Position der einzelnen Ausnehmungen in Dickenrichtung beliebig gewählt werden.

Auch der Abstand der Einkoppelstrukturen 200 zueinander ist nicht limitiert. Als Kriterium zur Festlegung dieses Parameters kann jedoch der Abstand (Pitch) jeweils benachbarter Leuchtmittel 501, LEDs bzw. LED-Chips, verwendet werden. So kann beispielsweise als geeigneter Abstand der einzelnen Einkoppelstrukturen 200 zueinander der Pitchabstand, wie er beispielsweise bei handelsüblichen LED-Modulen üblich ist, verwendet werden.

Die Einkoppelstrukturen 200 sind gemäß der Erfindung derart ausgebildet, dass sie das von außen kommende Licht als gerichtete Strahlenbündel 400 einkoppeln. Dies wird besonders deutlich in der Darstellung der Figur 2, die die Aufweitung des von einem Leuchtmittel 501 ausgesandten Lichts durch dessen Strahlengang schematisch darstellt. Der Effekt, das Licht als gerichtete Strahlenbündel in den Lichtleiter einzukoppeln, wird dadurch erreicht, dass die Einkoppelstrukturen 200 aus mehreren zueinander abgewinkelten Flächen bzw. Flanken bestehen, wobei jede der abgewinkelten Flächen das einfallende Licht aufteilt und zugleich fokussiert, so dass ein mit einer Vorzugsrichtung ausgerichtetes Strahlenbündel 400 in der Lichtleitplatte 100 erzeugt wird.

Das in den Figuren 1 und 2 dargestellte Ausführungsbeispiel zeigt die einzelnen Einkoppelstrukturen 200 als zwei zueinander abgewinkelte Flächen 201, 201, die vorzugsweise in der gezeigten Draufsicht eine dreieckige Form aufweisen können. Der in Draufsicht auf die Lichtleitplatte durch die beiden abgewinkelten Flächen eingeschlossene Winkel kann dabei Werte zwischen 60° und 120° aufweisen, vorzugsweise sind die beiden Flächen im Wesentlichen rechtwinklig zueinander (eingeschlossener Winkel von in etwa 90°) angeordnet.

Die Tiefe T1 jeder Einkoppelstruktur 200 ausgehend von der Stirnseite 103 ist in der Figur 2 gekennzeichnet und diese kann im Rahmen der Erfindung beliebig gewählt werden. Bevorzugt ist ein definiertes Verhältnis von Tiefe T1 zu Plattendicke D bzw. Höhe der Leiterplatte 100.

Figur 1 zeigt eine Anordnung der Auskoppelstrukturen 300 gemäß einer Ausführungsform auf einer der beiden flächigen Seiten 102, 103. Die Auskoppelstrukturen 300 sind dazu vorgesehen, das über die Einkoppelstrukturen 200 eingekoppelte Licht derart umzulenken, um es bevorzugt über eine der beiden flächigen Seiten, vorzugsweise die den Auskoppelstrukturen 300 gegenüberliegende flächige Seite, wieder aus der Lichtleitplatte 100 auszukoppeln. Wie in Figur 1 gut zu sehen ist, können die Auskoppelstrukturen 300 vorzugsweise mit Abstand zu den an der Stirnseite 103 angeordneten Einkoppelstrukturen 200 vorgesehen sein.

Wie in den Figuren 1, 3 und 5 dargestellt, weist jede der Auskoppelstrukturen 300 gemäß der Erfindung eine längliche Form in Draufsicht auf die Lichtleitplatte 100 auf. Die Form der Auskoppelstruktur kann dabei vorzugsweise symmetrisch zu ihrer Längsachse sein, jedoch sind auch andere Ausprägungen für die Formgebung der Auskoppelstrukturen 300 in Draufsicht auf die Lichtleitplatte 100 möglich. Die Längsachsen der einzelnen Auskoppelstrukturen 300 erstrecken sich dabei im Wesentlichen in der flächigen Ebene der Lichtleitplatte 100 und bevorzugt im Wesentlichen in der Ebene der flächigen Seite, an der sie angeordnet sind.

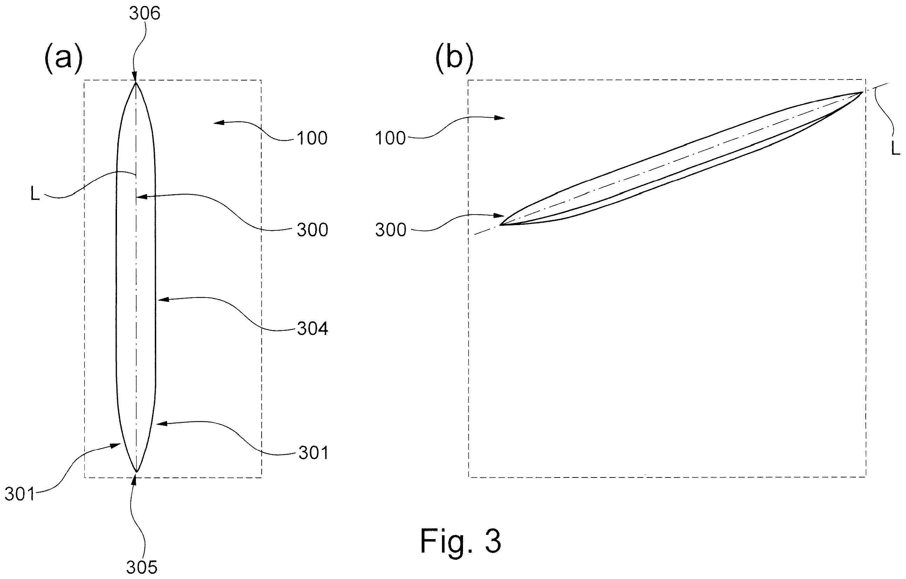

Die Figuren 3 und 4 sind besonders geeignet für die weitere Beschreibung vorteilhafter Ausführungsformen der Auskoppelstrukturen 300 gemäß der Erfindung. So wird in Figur 4 sichtbar, dass die Auskoppelstrukturen 300 vorzugsweise als konkave Ausnehmungen an bzw. in einer der flächigen Seiten 101, 102 ausgebildet sind. Die Figur 4 zeigt die Auskoppelstrukturen 300 an der ersten flächigen Seite 101 der Lichtleitplatte 100, wobei alternativ auch ein Vorsehen der Auskoppelstrukturen auf der zweiten flächigen Seite 102 gleichermaßen geeignet ist. Grundsätzlich ist es auch denkbar, an beiden gegenüberliegenden flächigen Seiten 101, 102 entsprechende Auskoppelstrukturen 300 vorzusehen.

Die Figur 3 zeigt eine bevorzugte Form der Auskoppelstruktur 300 gemäß einer bevorzugten Ausführungsform der Erfindung in Draufsicht auf die sie aufweisende flächige erste Seite 101 der Lichtleitplatte 100. Dabei wird ersichtlich, dass die als konkave Ausnehmung gebildete Auskoppelstruktur 300 bezüglich ihrer Längsachse L zu ihren beiden Enden 305, 306 hin spitz zuläuft und bevorzugt spitz zulaufende Flanken 301, 301 besitzt und ferner bevorzugt ein langgezogenes Mittelteil 304 dazwischen aufweist.

In den Figuren 3 und 4 wird des Weiteren die Form der Auskoppelstruktur 300 in Richtung ihrer Längsachse L deutlich. So kann die konkave Ausnehmung der Auskoppelstruktur 300 in Richtung ihrer Längsachse L gesehen einen im Wesentlichen U-förmigen oder V-förmigen Querschnitt aufweisen. Dieser kann wiederum zwei aufeinander zu laufende Flanken 302, 302 aufweisen, die sich in einer gemeinsamen Mittelkante 303 treffen.

Die Tiefe T2 jeder Auskoppelstruktur 300 ist in der Figur 4 gekennzeichnet und diese kann im Rahmen der Erfindung beliebig gewählt werden. Bevorzugt ist ein definiertes Verhältnis von Tiefe T2 zu Plattendicke D bzw. Höhe der Lichtleitplatte.

Wie bereits erwähnt, wird die vorgestellte Lichtleitplatte 100 in ihren unterschiedlichen Ausprägungen in Kombination mit Leuchtmitteln 501 als eine Leuchte 1 betrieben werden. Dazu sind die Leuchtmittel 501 derart angeordnet, dass Licht über die Einkoppelstrukturen 300 entsprechend in die Lichtleitplatte 100 eingekoppelt werden kann.

Des Weiteren sind an einer derartigen Leuchte 1, vorzugsweise an einem Bereich der Stirnseite 103 der Lichtleitplatte 100, die Leuchtmittel 501 angebracht.

Diese können ferner in einer Leuchtmittelhaltevorrichtung 500 befestigt sein, um so die Befestigung mehrere Leuchtmittel 501 zu gewährleisten. Dabei ist es alternativ oder zusätzlich auch denkbar, wie in den vorliegenden Ausführungsbeispielen dargestellt, ein Array aus mehreren Leuchtmitteln 501 bereitzustellen, bei dem jeder einzelnen Einkoppelstruktur 200 ein Leuchtmittel 501 zugeordnet ist. Wie in Figur 1 und 2 dargestellt, ist das Leuchtmittel 501 in der konkaven Ausnehmung der Einkoppelstruktur 200 angeordnet.

Als Leuchtmittel 501 können unterschiedliche lichtabstrahlende Elemente verwendet werden, wie LEDs gemäß der Erfindung. Dabei sind bevorzugt mehrere LEDs auf einer Leuchtmittelhaltevorrichtung bzw. Leiterplatte 500 zusammengefasst, welche sich bevorzugt entlang eines die Einkoppelstrukturen 300 aufweisenden Bereichs 104 der Stirnseite 103 erstreckt. Als Leuchtmittelhaltevorrichtung 500 kann beispielsweise eine Leiterplatte verwendet werden, jedoch sind auch andere Vorrichtungen denkbar.

Die weiteren Eigenschaften der vorgestellten Lichtleitplatte 100 werden unter Zuhilfenahme der Figuren 1, 2, 4 und 5 erläutert:
Aus Figur 2 wird das Funktionsprinzip für eine einzelne Einkoppelstruktur 200 deutlich. Das von Außerhalb auf die Lichtleitplatte auftreffende Licht, das zum Beispiel von dem Leuchtmittel 501 ausgesandt werden kann, trifft auf die abgewinkelten Flächen 201 der Einkoppelstruktur 200 unter Winkeln hier von +/- 90 Grad.

Die flächigen und zueinander abgewinkelten Seiten 201 der Einkoppelstruktur 200 spalten das Licht in gleichwertige Strahlenbündel 400 auf und fokussieren das Licht, indem eine Reduzierung der jeweiligen Abstrahlungswinkel des Lichts durch die abgewinkelten Seiten 201 hervorgerufen wird. So kann mit der vorgestellten erfindungsgemäßen Anordnung ein reduzierter Lichtaufweitungswinkel von beispielsweise etwa +/-28 Grad je Strahlbündel 400 je abgewinkelte Fläche 201 erreicht werden, wobei die Anmeldung hierauf nicht beschränkt ist. Damit wird es möglich, dass jedes Strahlbündel 400 eine Vorzugsrichtung der Ausbreitungsrichtung erhält, die im Wesentlichen senkrecht zu der flächigen abgewinkelten Seite 201 orientiert ist.

Die in den Figuren dargestellten Ausführungsbeispiele zeigen den speziellen Fall, dass nur zwei abgewinkelte Flächen 201 an den Einkoppelstrukturen 200 vorgesehen sind. Daher werden auch lediglich zwei Strahlenbündel 400 erzeugt und die Auskoppelstrukturen 300 lassen sich somit in zwei Gruppen einteilen, wie in Figur 1 gut erkennbar ist.

Jedoch ist es beispielsweise ferner auch denkbar, dass die Lichtleitplatte 100 Einkoppelstrukturen 200 mit jeweils n (n>2) flächigen und zueinander abgewinkelten Seiten bzw.

Flächen bzw. Flanken 201 in Draufsicht auf die Lichtleitplatte 100 besitzt. Somit kann dann das über die Einkoppelstrukturen 200 in die Lichtleitplatte 100 eingekoppelte Licht in n unterschiedlich gerichtete Strahlbündel 400 aufgespalten werden. Die Gesamtheit der Einkoppelstrukturen 200 weist dabei bevorzugt n Gruppen jeweils im Wesentlichen gleich gerichteter Strahlbündel 400 auf. Mit anderen Worten sind die n Flanken der Einkoppelstrukturen in n Gruppen aufgeteilt, wobei die Flanken einer Gruppe alle im Wesentlichen parallel zueinander ausgerichtet sind. Die Einkoppelstrukturen 200 besitzen folglich die Flanken n1, n2, ..., wobei die ersten Flanken n1 alle zueinander im Wesentlichen parallel ausgerichtete sind. Ebenso die zweiten Flanken n2 und so weiter. Die Flanken n1 und n2 etc. sind dann wiederum zueinander entsprechend definiert abgewinkelt.

Die Auskoppelstrukturen 300 können dann im Hinblick auf diese n Strahlbündel 400 in n unterschiedlichen Gruppen eingeteilt werden, wobei jede Gruppe die gleiche Ausrichtung bzw. Orientierung der Auskoppelstrukturen 300 bereitstellt. Dabei sind Auskoppelstrukturen 300 jeder der n Gruppen je einer der Richtungen der n Strahlbündel 400 zugeordnet, indem sie mit ihren Längsachsen im Wesentlichen senkrecht zu dieser Richtung des zugeordneten Strahlenbündels 400 ausgerichtet sind.

Dadurch wird eine Anordnung der Auskoppelstrukturen 300 erreicht werden, bei der jeweils ein Teil der Auskoppelstrukturen 300 senkrecht zu einem der Strahlbündel 400 angeordnet ist, während dieselbe Auskoppelstruktur 300 beispielsweise längs des/eines anderen Strahlbündels 400 ausgerichtet ist. Somit wird ein möglichst senkrechter Einfallswinkel der jeweiligen Strahlbündel 400 auf die jeweils ihnen zugeordnete bzw. zugewandte Auskoppelstruktur 300 ermöglicht. Die nicht zugeordneten Auskoppelstrukturen 300 beeinflussen den nicht zugeordneten Strahlbündel 400 somit im Wesentlichen nicht, wodurch eine definierte Lichtauskopplung erzielt wreden kann; beispielsweise mit besonders guter Entblendung. Im Vergleich hierzu würde bei einer Lichteinkopplung ohne entsprechende Einkoppelstrukturen 200 das Licht mit einer Aufweitung von +/- 45° in die Lichtleitplatte eingeleitet werden, wodurch eine Abstimmung mit entsprechenden Auskoppelstrukturen 300 schwierig bis nahezu kaum möglich ist.

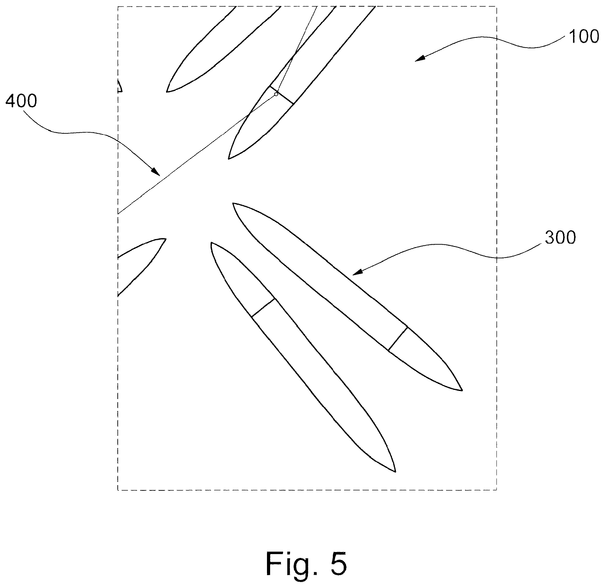

Die Auskoppelstrukturen 300, in einer Ausgestaltung, die nicht Teil der beanspruchten Erfindung ist, müssen, wie beispielsweise in Figur 5 dargestellt, zu anderen Auskoppelstrukturen 300 in ihrer Orientierung nicht zwingend parallel ausgerichtet sein. Sie können beispielsweise auch in der flächigen Ebene leicht zueinander geneigt angeordnet sein. Ihre Längsachsen können hierzu beispielsweise einen Winkel von maximal 20°, 15° oder 100 einschließen.

Die vorliegende Erfindung ist auf das vorhergehende Ausführungsbeispiel nicht beschränkt, sofern sie vom Gegenstand der folgenden Ansprüche umfasst ist.

Beispielsweise ist die Form der Lichtleitplatte 100 sowie deren Material nicht durch die Erfindung beschränkt. Auch die Anzahl, Form, Tiefe und Erstreckung sowie insgesamt die Dimensionen der Einkoppelstrukturen und Auskoppelstrukturen sind grundsätzlich nicht durch die Erfindung beschränkt, sofern sie zur definierten Lichtumlenkung aufeinander abgestimmt sind. Auch ist die Anzahl an Gruppen, sofern grösser oder gleich 2, von Einkoppelstrukturen und Auskoppelstrukturen nicht durch die Erfindung beschränkt.

## Patentansprüche

1. Leuchte, aufweisend
eine flächige Lichtleitplatte (100), aufweisend:
- zwei flächige Seiten (101, 102), welche durch eine umlaufende Stirnseite (103) miteinander verbunden sind,
- Einkoppelstrukturen (200), die an der Stirnseite (103) vorgesehen und dazu eingerichtet sind, Licht von Außerhalb in die Lichtleitplatte (100) als gerichtete Strahlbündel (400) einzukoppeln,
wobei die Einkoppelstrukturen (200) sich jeweils als konkave Ausnehmung zwischen den flächigen Seiten (101, 102) wenigstens über einen Teil der gesamten Höhe (D) der Lichtleitplatte (100) erstrecken,
wobei jede der Einkoppelstrukturen (200) in Draufsicht auf eine der flächigen Seiten (101, 102) zwei zueinander abgewinkelte Flächen bzw. Flanken (201) besitzt, über die das eingekoppelte Licht als zwei unterschiedlich gerichtete Strahlbündel (400) eingekoppelt wird,
wobei die zwei zueinander abgewinkelten Flächen bzw. Flanken (201) der Einkoppelstrukturen (200) in zwei Gruppen aufgeteilt sind,
wobei die Flächen bzw. Flanken (201) einer Gruppe alle parallel zueinander ausgerichtet sind, und
wobei die Gesamtheit der Einkoppelstrukturen (200) zwei Gruppen jeweils gleich gerichteter Strahlbündel (400) aufweist; und
- Auskoppelstrukturen (300), die an einer der flächigen Seiten (101, 102) vorgesehen sind, um das über die Einkoppelstrukturen (200) eingekoppelte Licht in der Lichtleitplatte (100) derart umzulenken, um es über eine der flächigen Seiten (101,102) aus der Lichtleitplatte (100) auszukoppeln,
wobei die Auskoppelstrukturen (300) eine längliche Form aufweisen,
wobei sich die Auskoppelstrukturen (300) mit ihrer Längsachse im Wesentlichen in der flächigen Ebene der Lichtleitplatte (100) erstrecken; sowie Leuchtmittel (501), welche derart angeordnet sind, um Licht über die Einkoppelstrukturen (200) in die Lichtleitplatte (100) einzukoppeln, wobei die Leuchtmittel LEDs aufweisen,
wobei jeder der Einkoppelstrukturen (200) zumindest ein Leuchtmittel (501) zugeordnet ist, und wobei das zugeordnete Leuchtmittel (501) in der konkaven Ausnehmung der zugeordneten Einkoppelstruktur (200) angeordnet ist, **dadurch gekennzeichnet, dass** die Orientierung jeder der Auskoppelstrukturen (300) derart der Richtung eines der Strahlbündel (400) zugeordnet ist, dass sie mit ihren Längsachsen senkrecht zu der Richtung des zugeordneten Strahlbündels (400) orientiert sind, und wobei die Auskoppelstrukturen (300) in zwei unterschiedliche Gruppen jeweils gleicher Orientierung eingeteilt sind, und die Auskoppelstrukturen (300) jeder der zwei Gruppen je einer der Richtungen der zwei Strahlbündel (400) zugeordnet sind.

2. Leuchte nach Anspruch 1, wobei der Querschnitt der Lichtleitplatte (100) in Draufsicht mehreckig, vorzugsweise rechteckig ausgebildet ist, wobei die Stirnseite (103) aus einzelnen länglichen Stirnseitenbereichen (104) besteht und die Einkoppelstrukturen (200) an wenigstens einem der länglichen Stirnseitenbereiche (104) vorgesehen sind.

3. Leuchte nach einem der vorhergehenden Ansprüche, wobei die Einkoppelstrukturen (200) an sich bezüglich der flächigen Seiten (101, 102), insbesondere bezüglich der flächigen Erstreckung der Lichtleitplatte (100), jeweils gegenüberliegenden Bereichen oder Seiten der Stirnseite (103) vorgesehen sind.

4. Leuchte nach einem der vorhergehenden Ansprüche, wobei die Einkoppelstrukturen (200) sich über die gesamte Höhe (D) der Lichtleitplatte (100) erstrecken.

5. Leuchte nach einem der vorhergehenden Ansprüche, wobei die Einkoppelstrukturen (200) in Draufsicht auf eine der flächigen Seiten (101, 102) eine dreieckige Form aufweisen.

6. Leuchte nach einem der vorhergehenden Ansprüche, wobei die zwei zueinander abgewinkelten Flächen (201, 201) einen Winkel im Bereich von 60° bis 120°, bevorzugt von 90°einschließen.

7. Leuchte nach einem der vorhergehenden Ansprüche, wobei die Auskoppelstrukturen (300) als konkave Ausnehmungen in einer der flächigen Seiten (101, 102) ausgebildet sind.

8. Leuchte nach Anspruch 7, wobei die konkaven Ausnehmungen der Auskoppelstrukturen (300) in Draufsicht auf die sie aufweisende flächige Seite (101, 102) jeweils bezüglich ihrer Längsachse zu ihren beiden Enden (305, 306) hin spitz zulaufen, vorzugsweise spitz zulaufende Flanken (301, 301) aufweisen.

9. Leuchte nach einem der Ansprüche 7 oder 8, wobei die konkaven Ausnehmungen der Auskoppelstrukturen (300) in Richtung ihrer Längsachse gesehen einen U-förmigen oder V-förmigen Querschnitt aufweisen, der zwei aufeinander zu laufende Flanken (302, 302) aufweist.

10. Leuchte nach einem der vorhergehenden Ansprüche, wobei die Auskoppelstrukturen (300) derselben Gruppe in ihrer Orientierung parallel zu den jeweils zugeordneten abgewinkelten Flächen bzw. Flanken (201) der Einkoppelstrukturen (200) stehen, und/oder wobei die Auskoppelstrukturen (300) der einen Gruppe senkrecht zu den Auskoppelstrukturen (300) der anderen Gruppe orientiert sind.

11. Leuchte nach einem der vorhergehenden Ansprüche, wobei mehrere LEDs auf einer Leiterplatte (500) zusammengefasst sind, welche sich ferner bevorzugt entlang eines die Einkoppelstrukturen (200) aufweisenden Bereichs der Stirnseite (103) erstreckt.

## Claims

1. Lamp, comprising
a planar light guide plate (100), comprising:
- two planar sides (101, 102) which are connected to one another by a circumferential end face (103),
- coupling structures (200) which are provided on the end face (103) and designed to couple light from outside into the light guide plate (100) as a directed beam bundle (400),
the coupling structures (200) each extending as a concave recess between the planar sides (101, 102) at least over part of the entire height (D) of the light guide plate (100),
each of the coupling structures (200) having, when viewed in plan view of one of the planar sides (101, 102), two surfaces or flanks (201) which are angled relative to one and via which the coupled light is coupled in as two beam bundles (400) directed in different directions,
the two surfaces or flanks (201) of the coupling structures (200) angled relative to one another being divided into two groups,
the surfaces or flanks (201) of a group all being aligned in parallel with one another, and
the entirety of the coupling structures (200) having two groups each of the beam bundles (400) directed in the same direction; and
- outcoupling structures (300) which are provided on one of the planar sides (101, 102) in order to deflect the light coupled into the light guide plate (100) via the coupling structures (200) in such a way as to couple this light out of the light guide plate (100) via one of the planar sides (101, 102),
the outcoupling structures (300) having an elongate shape,
the outcoupling structures (300) extending with their longitudinal axis substantially in the planar plane of the light guide plate (100);
and lighting means (501) which are arranged in such a way to couple light into the light guide plate (100) via the coupling structures (200), the light sources having LEDs,
each of the coupling structures (200) being associated with at least one lighting means (501), and the associated lighting means (501) being arranged in the concave recess of the associated coupling structure (200),
**characterized in that** the orientation of each of the outcoupling structures (300) is associated with the direction of one of the beam bundles (400) in such a way that they are oriented with their longitudinal axes perpendicular to the direction of the associated beam bundle (400), and the outcoupling structures (300) being divided into two different groups in each case of the same orientation, and the outcoupling structures (300) of each of the two groups being associated with one of the directions of the two beam bundles (400).

2. Lamp according to claim 1, wherein the cross section of the light guide plate (100) is polygonal in plan view, preferably rectangular, wherein the end face (103) consists of individual elongate end face regions (104) and the coupling structures (200) are provided on at least one of the elongate end face regions (104).

3. Lamp according to either of the preceding claims, wherein the coupling structures (200) are each provided in opposite regions or sides of the end face (103) with respect to the planar sides (101, 102), in particular with respect to the planar extension of the light guide plate (100).

4. Lamp according to any of the preceding claims, wherein the coupling structures (200) extend over the entire height (D) of the light guide plate (100).

5. Lamp according to any of the preceding claims, wherein the coupling structures (200) have a triangular shape when viewed in plan view of one of the planar sides (101, 102).

6. Lamp according to any of the preceding claims, wherein the two surfaces (201, 201) angled relative to one another form an angle in the range of 60° to 120°, preferably of 90°.

7. Lamp according to any of the preceding claims, wherein the outcoupling structures (300) are formed as concave recesses in one of the planar sides (101, 102).

8. Lamp according to claim 7, wherein the concave recesses of the outcoupling structures (300), when viewed in plan view of the planar side (101, 102) comprising them, each taper with respect to their longitudinal axis toward their two ends (305, 306), preferably have tapered flanks (301, 301).

9. Lamp according to either claim 7 or claim 8, wherein the concave recesses of the outcoupling structures (300), when viewed in the direction of their longitudinal axis, have a U-shaped or V-shaped cross section comprising two flanks (302, 302) which extend relative to one another.

10. Lamp according to any of the preceding claims, wherein the outcoupling structures (300) of the same group are oriented in parallel with each of the associated angled surfaces or flanks (201) of the coupling structures (200), and/or wherein the outcoupling structures (300) of one group are oriented perpendicularly to the outcoupling structures (300) of the other group.

11. Lamp according to any of the preceding claims, wherein a plurality of LEDs are combined on a printed circuit board (500) which preferably further extends along a region of the end face (103) comprising the coupling structures (200).

## Revendications

1. Luminaire, présentant
une plaque de guidage de lumière (100) plane, présentant :
- deux faces planes (101, 102), lesquelles sont reliées l'une à l'autre par une face frontale (103) circonférentielle,
- des structures de couplage (200), lesquelles sont prévues sur la face frontale (103) et conçues pour coupler de la lumière de l'extérieur dans la plaque de guidage de lumière (100) sous forme de faisceaux de rayons (400) dirigés,
dans lequel les structures de couplage (200) s'étendent respectivement sous forme d'évidement concave entre les faces planes (101, 102) au moins sur une partie de la hauteur totale (D) de la plaque de guidage de lumière (100),
dans lequel chacune des structures de couplage (200) possède, en vue de dessus sur l'une des faces planes (101, 102), deux surfaces ou flancs (201) inclinés l'un par rapport à l'autre, par l'intermédiaire desquels la lumière couplée est couplée sous forme de deux faisceaux de rayons (400) dirigés différemment,
dans lequel les deux surfaces ou flancs (201) inclinés l'un par rapport à l'autre des structures de couplage (200) sont divisés en deux groupes,
dans lequel les surfaces ou flancs (201) d'un groupe sont tous orientés parallèlement l'un à l'autre, et
dans lequel l'ensemble des structures de couplage (200) présente deux groupes de faisceaux de rayons (400) respectivement dirigés de manière identique ; et
- des structures de découplage (300), lesquelles sont prévues sur l'une des faces planes (101, 102) pour dévier la lumière couplée par l'intermédiaire des structures de couplage (200) dans la plaque de guidage de lumière (100) afin de la découpler de la plaque de guidage de lumière (100) par l'intermédiaire de l'une des faces planes (101, 102),
dans lequel les structures de découplage (300) présentent une forme allongée,
dans lequel les structures de découplage (300) s'étendent avec leur axe longitudinal sensiblement dans le plan plan de la plaque de guidage de lumière (100) ;
ainsi que des moyens lumineux (501), lesquels sont disposés de manière à coupler de la lumière dans la plaque de guidage de lumière (100) par l'intermédiaire des structures de couplage (200), dans lequel les moyens lumineux présentent des DEL,
dans lequel au moins un moyen lumineux (501) est associé à chacune des structures de couplage (200), et dans lequel le moyen lumineux (501) associé est disposé dans l'évidement concave de la structure de couplage (200) associée, **caractérisé en ce que** l'orientation de chacune des structures de découplage (300) est associée à la direction d'un des faisceaux de rayons (400) de telle sorte qu'elles sont orientées avec leurs axes longitudinaux perpendiculairement à la direction du faisceau de rayons (400) associé, et dans lequel les structures de découplage (300) sont divisées en deux groupes différents d'orientations respectivement identiques, et les structures de découplage (300) de chacun des deux groupes sont associées à respectivement l'une des directions des deux faisceaux de rayons (400).

2. Luminaire selon la revendication 1, dans lequel la section transversale de la plaque de guidage de lumière (100), en vue de dessus, est réalisée de manière polygonale, de préférence de manière rectangulaire, dans lequel la face frontale (103) est constituée de régions de face frontale allongées (104) individuelles et les structures de couplage (200) sont prévues sur au moins l'une des régions de face frontale allongées (104).

3. Luminaire selon l'une des revendications précédentes, dans lequel les structures de couplage (200) sont prévues sur des régions ou faces de la face frontale (103) respectivement opposées par rapport aux faces planes (101, 102), en particulier par rapport à l'étendue plane de la plaque de guidage de lumière (100).

4. Luminaire selon l'une des revendications précédentes, dans lequel les structures de couplage (200) s'étendent sur la hauteur totale (D) de la plaque de guidage de lumière (100).

5. Luminaire selon l'une des revendications précédentes, dans lequel les structures de couplage (200) présentent une forme triangulaire en vue de dessus sur l'une des faces planes (101, 102).

6. Luminaire selon l'une des revendications précédentes, dans lequel les deux surfaces (201, 201) inclinées l'une par rapport à l'autre forment un angle dans la plage de 60° à 120°, de préférence de 90°.

7. Luminaire selon l'une des revendications précédentes, dans lequel les structures de découplage (300) sont réalisées sous forme d'évidements concaves dans l'une des faces planes (101, 102).

8. Luminaire selon la revendication 7, dans lequel les évidements concaves des structures de découplage (300), en vue de dessus sur la face plane (101, 102) qui les présente, s'effilent vers leurs deux extrémités (305, 306) respectivement par rapport à leur axe longitudinal, de préférence présentent des flancs (301, 301) effilés.

9. Luminaire selon l'une des revendications 7 ou 8, dans lequel les évidements concaves des structures de découplage (300), vus dans la direction de leur axe longitudinal, présentent une section transversale en forme de U ou en forme de V qui présente deux flancs (302, 302) convergeant l'un vers l'autre.

10. Luminaire selon l'une des revendications précédentes, dans lequel les structures de découplage (300) du même groupe sont, dans leur orientation, parallèles aux surfaces ou flancs (201) inclinés respectivement associés des structures de couplage (200), et/ou dans lequel les structures de découplage (300) d'un groupe sont orientées perpendiculairement aux structures de découplage (300) de l'autre groupe.

11. Luminaire selon l'une des revendications précédentes, dans lequel plusieurs DEL sont réunies sur une carte de circuit imprimé (500) qui s'étend en outre de préférence le long d'une région, présentant les structures de couplage (200), de la face frontale (103).
